(19) **Europäisches Patentamt / European Patent Office / Office européen des brevets**

(11) **EP 1 642 413 B1**

(12) **FASCICULE DE BREVET EUROPEEN**

(45) Date de publication et mention
de la délivrance du brevet:
**03.01.2007 Bulletin 2007/01**

(21) Numéro de dépôt: **04767579.8**

(22) Date de dépôt: **05.07.2004**

(51) Int Cl.:
**H04L 9/30** *(2006.01)*

(86) Numéro de dépôt international:
**PCT/FR2004/001743**

(87) Numéro de publication internationale:
**WO 2005/006645 (20.01.2005 Gazette 2005/03)**

(54) **PROCEDE DE CHIFFREMENT/DECHIFFREMENT D UN MESSAGE ET DISPOSI TIF ASSOCIE**

**VERFAHREN ZUR VERSCHLÜSSELUNG/ENTSCHLÜNG EINER NACHRICHT SOWIE DAZUGEHÖRIGE VORRICHTUNG**

**METHOD FOR ENCODING/DECODING A MESSAGE AND ASSOCIATED DEVICE**

(84) Etats contractants désignés:
**DE ES FR GB IT**

(30) Priorité: **04.07.2003 FR 0308229**

(43) Date de publication de la demande:
**05.04.2006 Bulletin 2006/14**

(73) Titulaire: **Thomson Licensing
92100 Boulogne-Billancourt (FR)**

(72) Inventeur: **ANDREAUX, Jean-Pierre
F-35000 RENNES (FR)**

(74) Mandataire: **Blot, Philippe Robert Emile et al
Cabinet Lavoix
2, place d'Estienne d'Orves
75441 Paris Cedex 09 (FR)**

(56) Documents cités:
**WO-A-00/72504        WO-A-02/19613
WO-A-96/05673**

**Description**

La présente invention concerne un procédé de sécurisation et d'identification de messages sur un réseau, ainsi qu'un dispositif sécurisé correspondant.

Un réseau est constitué d'un ensemble de dispositifs émetteur/récepteur adaptés à échanger des messages par exemple par un bus numérique, par radiodiffusion ou par l'intermédiaire du réseau Internet.

Pour sécuriser la circulation de messages transmis sur le réseau entre un dispositif émetteur/récepteur sécurisé, couramment appelé autorité de certification, et un dispositif émetteur/récepteur client, il est connu de chiffrer les messages à l'aide de clés de chiffrement.

En général, le dispositif émetteur des messages dispose d'une clé de chiffrement et le dispositif récepteur d'une clé de déchiffrement correspondante.

Le chiffrement des messages a deux types principaux d'applications :

- la sécurisation d'un message qui consiste en une substitution à un texte clair, d'un texte inintelligible et inexploitable,

- l'identification d'un message qui consiste à garantir l'origine et l'intégrité d'un message transitant sur le réseau par utilisation d'une signature numérique.

Dans ces deux types d'applications, il convient de minimiser les risques d'interception et de déchiffrement frauduleux des messages par un tiers, ou de falsification par l'apposition frauduleuse d'une signature.

Différents procédés de cryptographie ont donc été proposés pour éviter les chiffrements ou déchiffrements non autorisés.

Par exemple, des procédés de cryptographie dits symétriques ont été proposés. Dans ces procédés, la même clé, appelée clé secrète est utilisée pour le chiffrement et le déchiffrement d'un message. Cependant, ces procédés sont faiblement sécurisés car lorsque la clé secrète est découverte, l'ensemble des dispositifs émetteur/récepteur du réseau est corrompu.

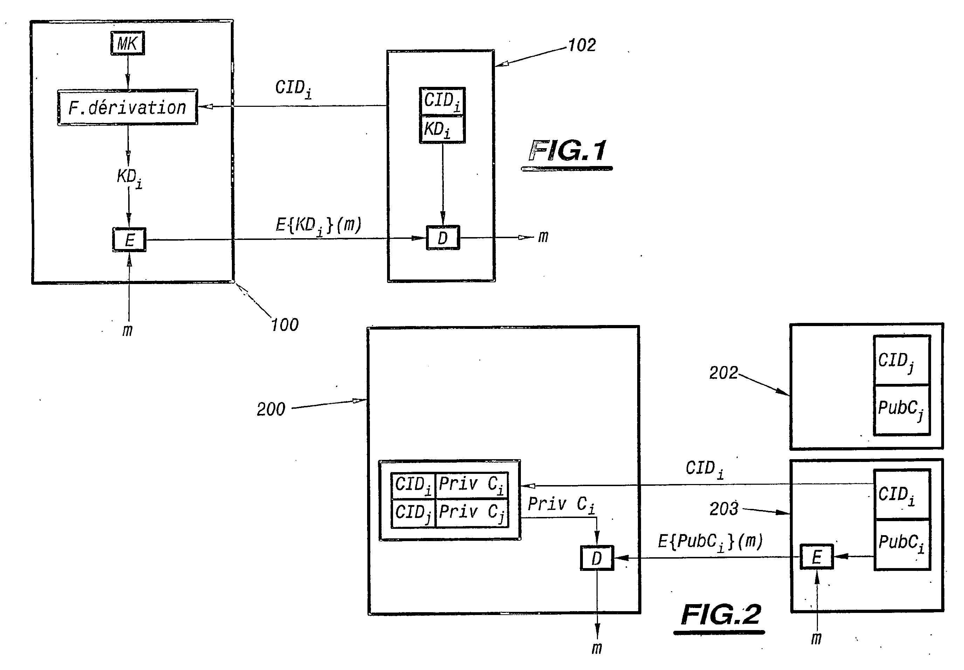

Une amélioration à de tels procédés consiste à utiliser des techniques dites de dérivation de clés symétriques. La figure 1 illustre un exemple d'utilisation de cette technique. Elle représente schématiquement l'architecture d'une autorité de certification 100 et d'un appareil client 102 donné d'un réseau d'appareils aptes à communiquer avec cette autorité de certification.

Selon la technique de dérivation de clés symétriques, chaque appareil client 102 possède sa propre clé de chiffrement/déchiffrement $KD_i$, différente des clés des autres appareils du réseau. Cette clé est calculée ou dérivée à partir d'un identifiant $CID_i$ stocké dans chaque appareil client 102 et d'une clé dite maîtresse MK connue de l'autorité de certification 100 uniquement. Cette clé dérivée est utilisée à la fois pour chiffrer et déchiffrer un message.

La clé dérivée $KD_i$ est générée au départ par l'autorité de certification puis mémorisée dans chaque appareil client de manière sécurisée. Ensuite, avant chaque échange de message m avec un appareil client donnée, l'autorité de certification 100 demande à l'appareil client 102 son identifiant $CID_i$ puis recalcule la clé dérivée $KD_i$ du dispositif client concerné par application d'une fonction de dérivation à l'identifiant $CID_i$ et à la clé maîtresse MK. Puis, l'autorité de certification chiffre (notation « E ») ou déchiffre (notation « D ») le message à l'aide de la clé dérivée calculée. La notation E $\{KD_i\}$ (m) correspond au chiffrement du message m à l'aide de la clé $KD_i$.

Un exemple de techniques dites de dérivation de clés symétriques utilisées pour l'identification d'un message est décrit dans le document WO 02/19613.

Cette technique est plus sécurisée qu'un procédé symétrique classique car lorsqu'une clé dérivée d'un appareil client donné est piratée, l'ensemble des appareils clients du réseau n'est pas corrompu car le pirate ne peut pas calculer les clés dérivés des autres appareils. Toutefois, cette technique est coûteuse car elle nécessite la sécurisation de l'ensemble des appareils clients.

Par ailleurs, des procédés de cryptographie asymétrique ont été proposés. Ces procédés se caractérisent par l'emploi d'un couple de clés de chiffrement et de déchiffrement non identiques appelées clé publique/clé privée.

La figure 2 illustre un exemple d'utilisation d'un procédé asymétrique dans lequel un appareil client 202, 203 est apte à transmettre un message chiffré à une autorité de certification 200.

Selon ce procédé asymétrique, chaque appareil client 202, 203 du réseau d'appareils clients comporte une clé publique $PubC_i$, $PubC_j$ qui lui est propre et qu'il utilise pour chiffrer un message m à transmettre. L'autorité de certification 200 stocke dans une base de données toutes les clés privées correspondant aux clés publiques des appareils clients. Les clés privées sont dans l'exemple de la figure 2 mémorisées par l'autorité de certification 200 avec les identifiants de chaque appareil client. Lorsqu'un appareil client 203 veut transmettre un message m chiffré à l'autorité de certification 200, il transmet, en plus du message m chiffré avec sa clé publique E $\{PubC_i\}$ (m), son identifiant $CID_i$ de sorte que l'autorité de certification puisse retrouver la clé privée correspondante $PrivC_i$. Le message m est alors déchiffré à l'aide de la clé privée $PrivC_i$.

Le document WO 96/05673 A décrit un tel procédé de chiffrement/déchiffrement d'un message à échanger entre un émetteur et un récepteur par l'intermédiaire d'un réseau de communication, l'émetteur et le récepteur étant tous les deux des dispositifs clients définis dans un réseau de dispositifs clients, le procédé comprenant l'étape de la réalisation d'opérations de cryptographie asymétrique, par les dispositifs clients, à l'aide d'une clé privée et d'une clé publique, la clé privée étant différente de la clé publique.

Avantageusement, de tels procédés asymétriques ne nécessitent pas la sécurisation des appareils clients. En effet, le piratage d'un appareil client et donc la découverte de sa clé publique de chiffrement n'autorise pas le déchiffrement du message envoyé. Seule la clé privée correspondant spécifiquement à cette clé publique de chiffrement permet le déchiffrement du message.

Cependant, le principal inconvénient de ce type de procédé asymétrique réside dans la nécessité pour l'autorité de certification de gérer une base de données dans laquelle sont stockées l'ensemble des clés privées de tous les appareils clients du réseau. Cette base de données nécessite une mémoire de stockage importante. De plus, la recherche d'une clé privée dans cette base de données implique des temps de transfert de message assez long qui handicapent les échanges.

En variante, des procédés asymétriques ont été proposés, dans lesquels, un unique couple de clés privée/publique chiffre l'ensemble des messages. Les appareils clients du réseau contiennent donc tous la même clé publique et l'autorité de certification stocke une unique clé privée. Toutefois, ces procédés ne sont pas suffisamment sécuritaires car le piratage de la clé privée corrompt l'ensemble du réseau des appareils clients.

Le but de la présente invention est de fournir un procédé de chiffrement/déchiffrement alternatif qui présente un niveau de sécurité élevé sans nécessiter le stockage et la gestion d'une base de données de clés asymétriques.

A cet effet, la présente invention a pour objet un procédé de chiffrement/déchiffrement d'un message à échanger entre un émetteur et un récepteur par l'intermédiaire d'un réseau de communication, l'émetteur et le récepteur étant l'un et l'autre d'un dispositif sécurisé et d'un dispositif client défini dans un réseau de dispositifs clients, le procédé comprenant les étapes de :

- réalisation d'opérations de cryptographie asymétrique par le dispositif sécurisé et par le dispositif client défini respectivement à l'aide d'une clé privée et d'une clé publique, la clé privée étant différente de la clé publique, et
- envoi d'au moins une donnée publique du dispositif client défini vers le dispositif sécurisé,

caractérisé en ce que le procédé comporte en outre, lors de chaque émission/réception d'un message chiffré par le dispositif sécurisé, une étape de détermination de la clé privée correspondant à la clé publique du dispositif client défini, à partir d'une clé maîtresse secrète stockée dans le dispositif sécurisé, et de la ou de chaque donnée publique envoyée par le dispositif client défini.

Avantageusement, ce procédé utilise les techniques de dérivation de clés symétriques associées au procédé de cryptographie asymétrique. Ainsi, les techniques de dérivation ne seront pas utilisées pour générer une clé dérivée secrète mais pour générer une clé privée d'un couple de clés privée/publique.

Un autre objet de l'invention consiste en un dispositif sécurisé apte à échanger des messages avec un dispositif client défini d'un réseau de dispositifs clients, sur un réseau de communication, le dispositif sécurisé étant apte à recevoir au moins une donnée publique propre audit dispositif client défini et envoyée par celui-ci préalablement à tout échange de messages, le dispositif sécurisé comprenant des moyens de réalisation d'opérations de cryptographie asymétrique à l'aide d'une clé privée correspondant à une clé publique stockée dans le dispositif client défini caractérisé en ce qu'il comprend, en outre des moyens de stockage sécurisés d'une clé maîtresse, et des moyens de détermination de ladite clé privée à partir de la clé maîtresse et de la ou de chaque donnée publique envoyée.

L'invention sera mieux comprise et illustrée au moyen d'un exemple de réalisation et de mise en oeuvre, nullement limitatif, en référence aux figures annexées sur lesquelles :

- la figure 1 est une vue schématique de l'architecture d'une autorité de certification et d'un appareil récepteur aptes à échanger des messages chiffrés selon un procédé de dérivation de clés symétriques connu,
- la figure 2 est une vue schématique de l'architecture d'une autorité de certification et d'un appareil émetteur aptes à échanger des messages chiffrés selon un procédé de chiffrement asymétrique connu,
- la figure 3 est une vue schématique de l'architecture d'un dispositif sécurisé selon un exemple de réalisation de l'invention pour la génération d'un couple de clés privée/publique lors d'une phase d'initialisation des appareils du réseau,
- la figure 4 est un diagramme récapitulatif des différentes étapes du procédé de chiffrement/déchiffrement lors de la phase d'initialisation, selon l'exemple de réalisation de l'invention,
- la figure 5 est une vue schématique de l'architecture d'un dispositif sécurisé et d'un dispositif client pour la sécurisation d'un message selon l'exemple de réalisation de l'invention, et
- la figure 6 est un diagramme récapitulatif des différentes étapes du procédé de chiffrement/déchiffrement pour la sécurisation d'un message selon l'exemple de réalisation de l'invention,

- la figure 7 est une vue schématique de l'architecture d'un dispositif sécurisé et d'un dispositif client pour l'identification d'un message, selon un exemple de réalisation de l'invention, et
- la figure 8 est un diagramme récapitulatif des étapes du procédé de chiffrement/déchiffrement pour l'identification d'un message selon l'exemple de réalisation de l'invention.

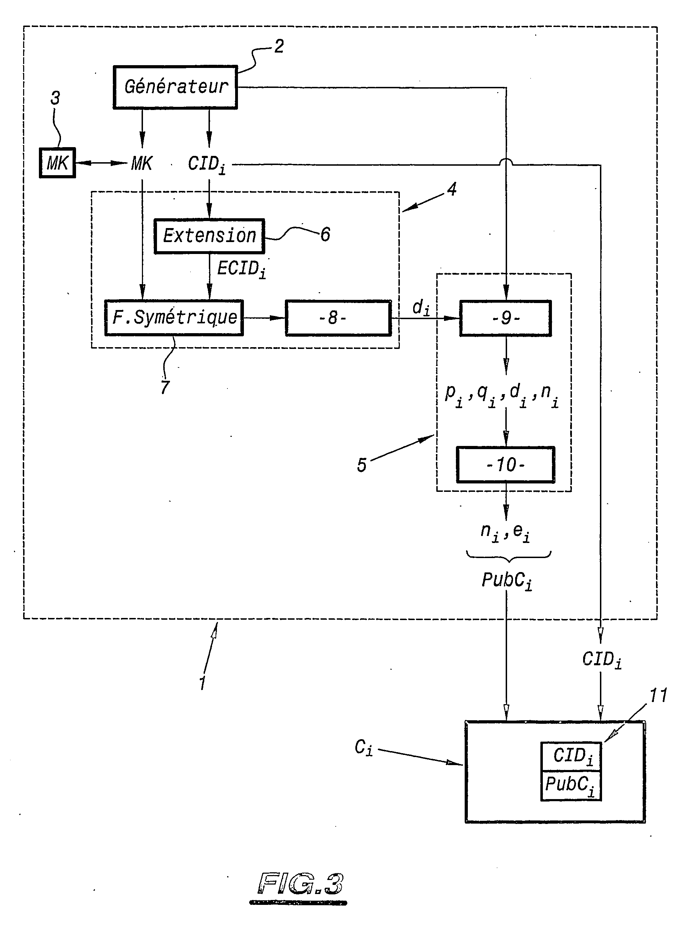

La figure 3 représente schématiquement l'architecture d'un dispositif sécurisé 1 et d'un dispositif client $C_i$.

Le dispositif sécurisé 1 comprend un générateur de nombres aléatoires 2, une mémoire 3 de stockage d'une clé maîtresse, un module de calcul 4 d'une partie $d_i$ de la clé privée et un module de calcul 5 d'une clé publique $PubC_i$.

Le générateur 2 de nombres aléatoires est apte à générer d'une part un nombre susceptible de constituer la clé dite maîtresse MK et d'autre part, une pluralité de nombres $CID_i$ aptes à identifier les dispositifs clients du réseau.

Préférentiellement, la clé dite maîtresse MK a une longueur de 128 bits et les identifiants $CID_i$, $CID_j$ des dispositifs clients $C_i$, $C_j$ ont une longueur de 64 bits.

Par ailleurs, le générateur 2 est également apte à générer au hasard deux grands nombres premiers impairs, distincts p et q de 512 bits utilisés pour le calcul de la clé publique par le module de calcul 5.

La mémoire 3 du dispositif sécurisé est non volatile de type « ROM » ou « EEPROM » ou équivalent. Elle est apte à stocker la clé maîtresse MK générée par le générateur 2. Comme la clé maîtresse est une clé secrète connue uniquement par le dispositif sécurisé, la mémoire 3 de stockage de cette clé est avantageusement hautement sécurisée afin de garantir la sécurité des messages échangés.

Le module de calcul 4 est apte à déterminer une partie d'une clé privée d'un couple de clés privée/publique. Généralement, une clé privée $PrivC_i$ est une clé mixte constituée de deux parties. La première partie est formée par une partie de la clé publique appelée modulus $n_i$ dans tout algorithme asymétrique. La deuxième partie est couramment appelée exposant secret $d_i$ dans les algorithmes asymétriques de type RSA : $PrivC_i = (n_i, d_i)$. Le module de calcul 4 est apte à calculer la deuxième partie $d_i$ de la clé privée $PrivC_i$. à partir de l'identifiant $CID_i$ du dispositif client $C_i$ et de la clé maîtresse MK.

Le module de calcul 4 comporte préférentiellement une unité de calcul 6 apte à effectuer une fonction de modification de la longueur d'un identifiant $CID_i$ en une extension de l'identifiant notée $ECID_i$. Une fonction d'extension connue appelée MGF peut par exemple être utilisée. Cette fonction permet d'étendre un nombre de 64 bits en un nombre de 1024 bits. Cette fonction est notamment décrite dans le document de RSA Laboratories « PKCS #1v2.1 : RSA Cryptography Standard - June 14, 2002 » disponible à l'adresse Internet suivante : ftp://ftp.rsasecurity.com/pub/pkcs/pkcs-1/pkcs-1v2-1.pdf

Le module de calcul 4 comprend une unité de chiffrement 7 de l'extension de l'identifiant $ECID_i$ à partir de la clé maîtresse MK. Cette unité met en oeuvre un algorithme de dérivation symétrique. De façon préférentielle, il s'agit de l'algorithme couramment appelé AES « Advanced Encryption Standard » utilisé en mode CBC. Cet algorithme est décrit dans le document FIPS 197, 26 Novembre, 2001 disponible sur Internet à l'adresse : http : //csrc.nist.gov/publications/fips/fips197/fips-197.pdf.

Avantageusement, le module de calcul 4 comprend également une unité de sélection 8 de l'exposant secret $d_i$ en fonction du résultat ou chiffré $ECID_i$ de l'extension de l'identifiant. Pour sélectionner cet exposant secret $d_i$, l'unité de sélection 8 utilise une fonction déterministe. Par exemple, cette unité est propre à sélectionner une donnée telle que cette donnée remplisse les critères ci-dessous :

- cette donnée $d_i$ doit être inférieure au résultat du chiffrement de l'extension de l'identifiant $ECID_i$,
- cette donnée $d_i$ doit être un nombre le plus proche du résultat du chiffrement de l'extension de l'identifiant $ECID_i$, premier avec une liste de nombres premiers: 2, 3, 5, 7, 11, 13. Eventuellement, cette dernière condition peut être étendue à une liste de nombres premiers plus longue.

Schématiquement, le module de détermination 5 peut être décomposé en deux unités de calculs. Chaque unité étant apte à calculer un élément de la clé publique : $PubC_i = (n_i, e_i)$.

La première unité de calcul 9 est apte à sélectionner deux grands nombres premiers $p_i$ et $q_i$ générés par le générateur de nombres aléatoires 2 de telle manière que $(p_i - 1) \times (q_i - 1)$ est premier avec l'exposant secret $d_i$. En pratique, on génère d'abord un nombre $p_i$ tel que $(p_i - 1)$ soit premier avec $d_i$ puis un nombre $q_i$ tel que $(q_i - 1)$ soit premier avec $d_i$.

Par ailleurs, cette unité de calcul 9 est apte à calculer la première partie de la clé privée appelée modulus $n_i$ tel que $n_i = p_i \times q_i$. Le modulus $n_i$ constitue également un élément de la clé privée $PrivC_i = (n_i, d_i)$.

La seconde unité de calcul 10 utilise un algorithme d'Euclide étendu pour calculer l'autre élément de la clé publique $e_i$ à partir des données secrètes $p_i$, $q_i$ et $d_i$. Cet algorithme d'Euclide étendu est notamment décrit dans l'ouvrage « Handbook of Applied Cryptography » de A. Menezes, P. van Oorschot et S. Vanstone, CRC Press, 1996, à la page 67. Cet ouvrage peut être consulté à l'adresse Internet suivante : http://www.cacr.math.uwaterloo.ca/hac/

Plus précisément, on calcule la donnée $e_i$ telle que :

$$e_i \times d_i = 1 \bmod (p_i\text{-}1) \times (q_i\text{-}1).$$

Les dispositifs clients $C_i$ du réseau comportent une mémoire 11 de stockage d'un identifiant $CID_i$ et d'une clé publique $PubC_i = (n_i, e_i)$ ainsi qu'un module de chiffrement asymétrique ou de vérification de signature.

Classiquement, un dispositif sécurisé 1 et les dispositifs clients $C_i$, $C_j$ de son réseau de communication sont personnalisés ou initialisés pour pouvoir échanger des messages chiffrés.

Les étapes de principe d'un procédé de personnalisation d'un dispositif sécurisé et des dispositifs clients selon l'invention vont maintenant être décrites.

Le procédé de personnalisation selon l'invention, comprend une première étape de génération d'une clé maîtresse unique MK destinée au dispositif sécurisé 1 et d'une pluralité d'identifiants $CID_i$, $CID_j$ destinés à caractériser ou personnaliser les dispositifs clients $C_i$, $C_j$ du réseau.

Ce procédé comprend une deuxième étape de calcul d'un couple de clés privée/publique associé à chaque dispositif client. Spécifiquement, la clé privée est obtenue par chiffrement de l'identifiant $CID_i$ de chaque dispositif client $C_i$ à l'aide de la clé maîtresse MK du dispositif sécurisé : $PrivC_i = f \{MK\} (CID_i)$. La clé publique $PubC_i$ correspondante est calculée à partir de la clé privée notamment par application d'une fonction mathématique utilisant par exemple, un algorithme d'Euclide étendu : $PubC_i = F (PrivC_i)$.

Selon une troisième étape du procédé de personnalisation du dispositif sécurisé et des dispositifs clients du réseau, les identifiants $CID_i$, $CID_j$ générés et les clés publiques $PubC_i$, $PubC_j$ calculées à partir de ceux-ci sont envoyés à chaque dispositif client $C_i$, $C_j$ du réseau ou sont insérés dans les dispositifs clients lors de leur fabrication.

Enfin, les clés privées correspondantes $PrivC_i$, $PrivC_j$, ainsi que l'ensemble des données intermédiaires ayant permis de calculer les couples de clés privée/publique sont détruites. Ainsi, le dispositif sécurisé ne stocke aucune donnée associée à l'un quelconque de ces dispositifs clients.

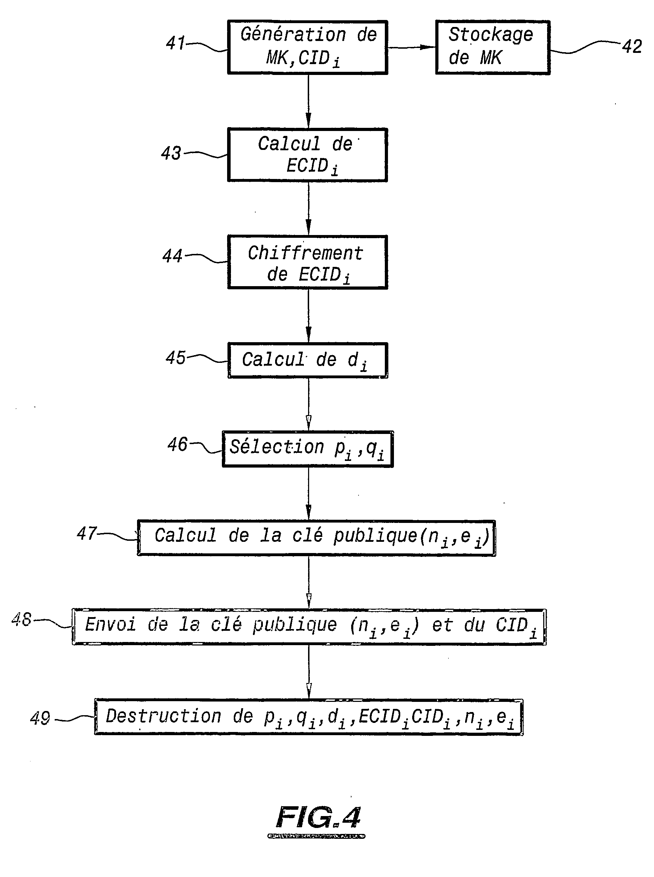

Les étapes d'un exemple de réalisation du procédé de personnalisation vont à présent être décrites en liaison avec la figure 4.

Pendant une étape 41 de la phase de personnalisation des dispositifs du réseau, le générateur 2 génère un nombre aléatoire de 128 bits qui constitue la clé maîtresse MK et un nombre de 64 bits apte à devenir l'identifiant $CID_i$ d'un dispositif client $C_i$ à personnaliser.

Lors d'une étape 42, la clé maîtresse MK ainsi générée est stockée dans la mémoire 3 du dispositif sécurisé 1. Cette clé maîtresse MK servira de base pour le calcul de l'ensemble des couples de clés privée/publique associés à tous les dispositifs clients du réseau.

Lors d'une étape 43, l'unité de calcul 6 étend l'identifiant $CID_i$ d'un dispositif client $C_i$ par un algorithme d'extension pour générer un nombre de 128 bits formant l'extension de l'identifiant $ECID_i$ .

L'extension de l'identifiant $ECID_i$ est ensuite chiffrée à l'étape 44 à l'aide de la clé maîtresse MK. Ce chiffrement est réalisé par l'unité de calcul 7 par application d'un algorithme symétrique de type AES.

Puis, lors d'une étape 45, l'unité de sélection 8 sélectionne un nombre formant l'exposant secret $d_i$.

Au cours des étapes 46 et 47, le module de calcul 5 sélectionne deux grands nombres premiers $p_i$ et $q_i$ et calcule la clé publique $PubC_i = (n_i, e_i)$ à partir de ces nombres et de l'exposant secret $d_i$.

Une fois la clé publique $PubC_i = (n_i, e_i)$ d'un dispositif client donnée $C_i$ calculée, le dispositif sécurisé 1 la lui envoie de façon sûre et non détaillée ici accompagné de l'identifiant $CID_i$ à l'origine du calcul de cette clé publique à l'étape 48.

L'identifiant $CID_i$ et la clé publique $PubC_i$ sont enregistrés dans la mémoire 11 du dispositif client $C_i$.

Avantageusement, selon l'invention, la mémoire 11 des dispositifs clients n'a pas besoin d'être sécurisée contre la lecture car la découverte de la clé publique $PubC_i$ et de l'identifiant $CID_i$ ne permet en aucune façon le calcul de la clé privée correspondante $PrivC_i$ ou le calcul d'une autre clé privée ou publique du réseau, de sorte que la sécurité du message chiffré transmis et du réseau de dispositifs récepteur /émetteur est préservée.

En outre, l'identifiant $CID_i$ ainsi que l'ensemble des données calculées à partir de celui-ci et notamment les données secrètes $p_i$ et $q_i$, l'exposant secret $d_i$, l'exposant public $e_i$, le modulus $n_i$, et l'extension de l'identifiant $ECID_i$ ne sont pas conservés dans la mémoire 3 du dispositif sécurisé 1 et sont détruits à l'étape 49.

En conséquence, le piratage de la clé maîtresse MK ne permet pas le calcul des clés privée/publique associées à un dispositif client donné sans la connaissance de son identifiant.

Le procédé de personnalisation a pour finalité de configurer le dispositif sécurisé et les dispositifs clients de manière à permettre l'échange des messages chiffrés en vue de leur sécurisation ou de leur identification.

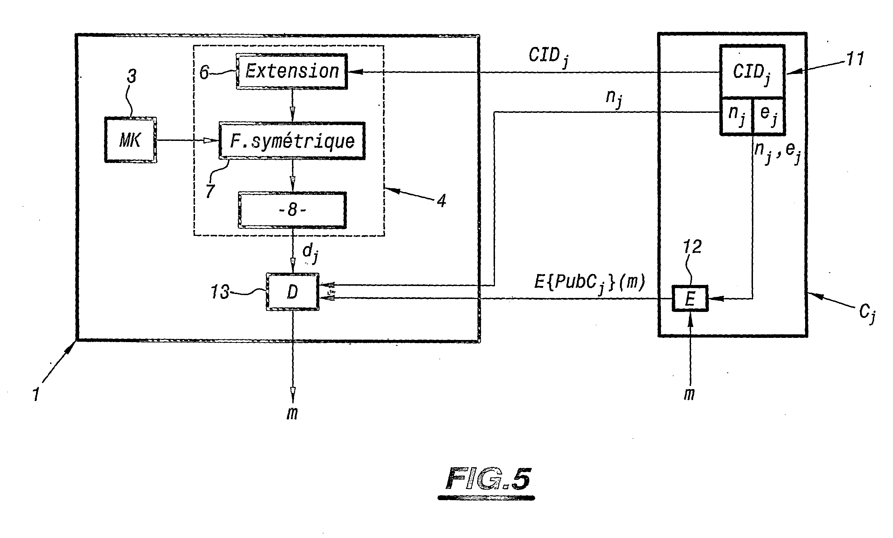

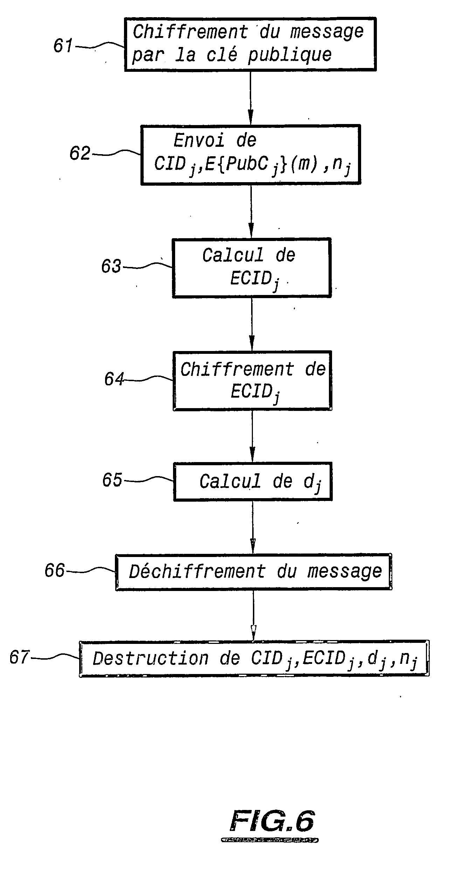

Un exemple d'utilisation des dispositifs émetteur/récepteur selon l'invention en référence aux figures 5 et 6 va être décrit à présent.

En particulier, la figure 5 représente l'architecture d'un dispositif client donné $C_j$ apte à envoyer un message chiffré E $\{Pub\ C_j\}$ (m) ainsi que l'architecture d'un dispositif sécurisé 1 apte à déchiffrer ce message.

Classiquement, le dispositif client $C_j$ comporte une mémoire 11 non volatile et un module de chiffrement 12.

La mémoire 11 du dispositif client $C_j$ comporte un identifiant $CID_j$ et une clé publique $PubC_j$ composée d'un modulus $n_j$, et d'une donnée publique $e_j$.

Le dispositif sécurisé 1 comprend une mémoire 3 dans laquelle la clé maîtresse MK est stockée, un module de calcul 4 de l'exposant secret $d_j$ et un module de déchiffrement 13.

Selon l'invention, le module de chiffrement 12 et le module de déchiffrement 13 utilisent des procédés de cryptographie asymétrique mettant en oeuvre des algorithmes tels que par exemple l'algorithme intitulé RSAES-OAEP. Une description de cet algorithme peut être trouvée dans le document « PKCS #1v2.1 : #RSA Crytography Standard » qui a déjà été mentionné précédemment.

Le module de calcul 4 de l'exposant secret $d_j$ comprend les mêmes unités de calcul que le module de calcul 4 utilisé lors de la phase de personnalisation des dispositifs clients. En conséquence, il calcule l'exposant secret $d_j$ à partir de l'identifiant $CID_j$ du dispositif client $C_j$ et de la clé maîtresse MK de la même manière que lors de la phase de personnalisation de sorte que cet exposant secret $d_j$ corresponde toujours à la clé publique $PubC_j$ de chiffrement stockée dans la mémoire 11 du dispositif client $C_j$.

Le procédé de chiffrement/déchiffrement pour sécuriser un message va être décrit de manière détaillée en liaison avec la figure 6.

Ce procédé comprend une étape 61 de chiffrement du message à transmettre. Ce chiffrement est réalisé par le module de chiffrement 12 du dispositif client $C_j$ à l'aide de la clé publique $PubC_j = (n_j, e_j)$.

$$E \{Pub\ C_j\} (m) = RSAES\text{-}OAEP\ Encrypt\ \{(n_j, e_j)\} (m)$$

Puis, lors d'une étape 62, l'identifiant $CID_j$ et le modulus $n_j$ du dispositif client $C_j$ ainsi que le message chiffré $E \{Pub\ C_j\} (m)$ sont envoyés au dispositif sécurisé 1.

Enfin, les unités de calcul 6, 7 et de sélection 8 du module de calcul 4 de l'exposant secret $d_j$ du dispositif sécurisé 1 réalisent une étape de calcul 63 de l'extension de l'identifiant $ECID_j$ à partir de l'identifiant $CID_j$ envoyé par le dispositif client $C_j$, une étape de chiffrement 64 de l'extension de l'identifiant $ECID_j$ à l'aide de la clé maîtresse MK et une étape de sélection 65 de l'exposant secret $d_j$ à partir du résultat du chiffrement de l'extension de l'identifiant $ECID_j$. Il est nécessaire que l'unité de sélection 8 utilise les mêmes règles de sélection que celles appliquées lors de la phase de personnalisation des dispositifs clients.

Finalement, le module de déchiffrement asymétrique 13 du dispositif sécurisé 1 réalise une étape 66 de déchiffrement du message à l'aide de la clé privée mixte composée de l'exposant secret calculé $d_j$ et du modulus $n_j$ envoyé par le dispositif client $C_j$ :

$$m = RSAES\text{-}OAEP - Decrypt\ \{(d_j, n_j)\} (E \{Pub\ C_j\} (m))$$

Avantageusement le dispositif sécurisé 1 ne conserve aucune donnée liée au dispositif client $C_j$ émetteur d'un message. Spécifiquement, son identifiant $CID_j$, l'extension $ECID_j$ de son identifiant, son exposant secret $d_j$ et son modulus $n_j$ sont détruits lors de l'étape 67.

Le procédé de chiffrement/déchiffrement de l'invention permet également d'identifier un message par apposition d'une signature par le dispositif sécurisé 1 et vérification de cette signature par un dispositif client $C_j$ à qui est destiné le message signé.

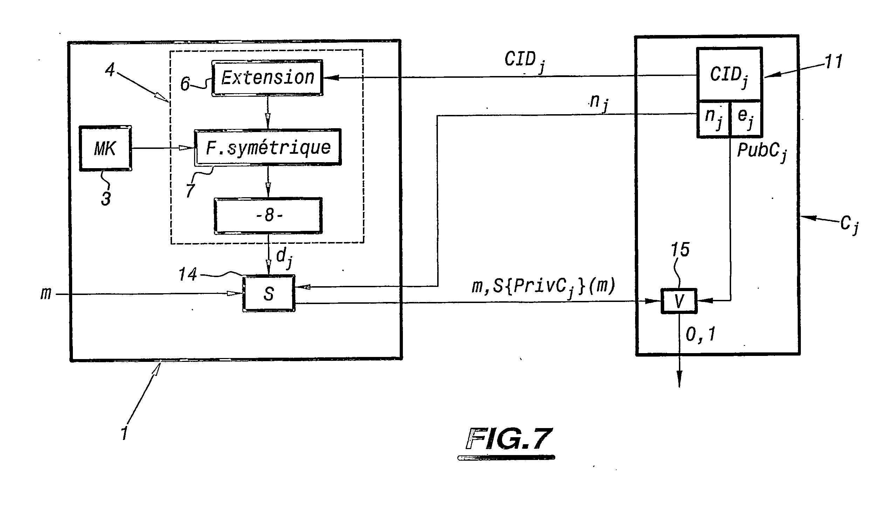

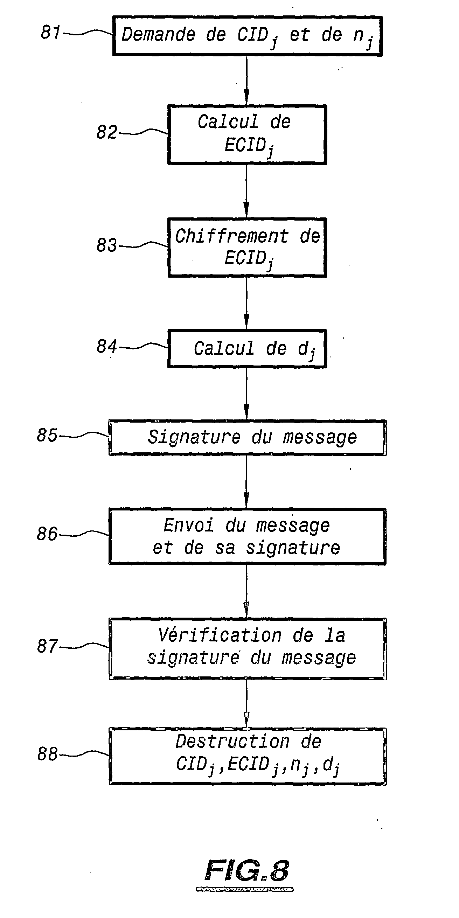

Le procédé de chiffrement/déchiffrement de l'invention utilisé pour identifier l'origine d'un message va être décrit en liaison avec les figures 7 et 8.

La figure 7 représente schématiquement l'architecture d'un dispositif sécurisé 1 et d'un dispositif client $C_j$ .

Le système composé d'un dispositif sécurisé et d'un dispositif client est similaire au système décrit en liaison avec la figure 5. En conséquence, les éléments communs aux figures 5 et 7 reprennent les mêmes références et ne seront pas à nouveau décrits.

En fait, le système dispositif sécurisé/dispositif client comporte les mêmes modules 4 et mémoires 3, 11 hormis le module de déchiffrement 13 du dispositif sécurisé et le module de chiffrement 12 du dispositif client qui sont remplacés respectivement par un module de génération de signature 14 et par un module de vérification 15 de signature.

Le procédé de chiffrement/déchiffrement utilisé pour la signature d'un message comprend une étape 81 au cours de laquelle le dispositif sécurisé 1 demande l'identifiant $CID_j$ et le modulus $n_j$ au dispositif client $C_j$ à qui il souhaite envoyer un message m signé.

Au cours des étapes 82, 83, et 84, le module de calcul 4 du dispositif sécurisé 1 recalcule l'exposant secret $d_j$

du dispositif client $C_j$ à partir de l'identifiant envoyé $CID_j$ et de la clé maîtresse MK de la même manière que dans le procédé de chiffrement/déchiffrement utilisé pour la sécurisation ou la personnalisation d'un message et décrit précédemment.

Puis, lors d'une étape 85, le module de signature 14 du dispositif sécurisé 1 signe son message à l'aide de l'exposant secret $d_j$ calculé et du modulus $n_j$ envoyé par le dispositif client $C_j$ : $S\{PrivC_j\}(m)$ avec $PrivC_j = (d_j, n_j)$.

Enfin, le dispositif de sécurisation 1 envoie au cours d'une étape 86, un message m ainsi que sa signature S $\{(d_j, n_j)\}$ (m) au dispositif client défini $C_j$.

Lors d'une étape 87, le module de vérification 15 du dispositif client $C_j$ vérifie la signature du message à l'aide de la clé publique $PubC_j = (n_j, e_j)$ stockée dans sa mémoire 11 et correspondant à la clé privée $PrivC_j = (d_j, n_j)$ en effectuant l'opération :

$$V\{PubC_j\} \, (S \, \{PrivC_j\} \, (m)) = 0 \text{ ou } 1$$

Lors d'une étape 88, l'identifiant $CiD_j$ du dispositif client défini $C_j$ et les données intermédiaires $CID_j$, $ECID_j$, $d_j$ et $n_j$ ayant permis de déterminer la clé privée sont détruits par le dispositif sécurisé.

Pour les opérations de signature S et de vérification de signature V, on pourra notamment utiliser l'algorithme RSASSA-PSS qui est décrit dans le document « PKCS#1v2.1 :RSA Cryptography Standard » mentionné plus haut.

## Revendications

1. Procédé de chiffrement/déchiffrement d'un message à échanger entre un émetteur et un récepteur par l'intermédiaire d'un réseau de communication, l'émetteur et le récepteur étant l'un et l'autre d'un dispositif sécurisé (1) et d'un dispositif client défini ($C_i$) dans un réseau de dispositifs clients ($C_i$, $C_j$), le procédé comprenant les étapes de :

   - réalisation d'opérations de cryptographie asymétrique par le dispositif sécurisé (1) et par le dispositif client défini ($C_i$) respectivement à l'aide d'une clé privée ($n_i$, $d_i$) et d'une clé publique ($n_i$, $e_i$), la clé privée étant différente de la clé publique, et
   - envoi (62, 81) d'au moins une donnée publique ($n_i$, $CID_i$) du dispositif client défini ($C_i$) vers le dispositif sécurisé (1),

   **caractérisé en ce qu'**il comporte en outre, lors de chaque émission/réception d'un message chiffré par le dispositif sécurisé, une étape de détermination de la clé privée ($n_i$, $d_i$) correspondant à la clé publique ($n_i$, $e_i$) du dispositif client défini ($C_i$), à partir d'une clé maîtresse secrète (MK) stockée dans le dispositif sécurisé, et de la ou de chaque donnée publique ($n_i$, $CID_i$) envoyée par le dispositif client défini ($C_i$).

2. Procédé de chiffrement/déchiffrement d'un message selon la revendication 1, **caractérisé en ce que** l'étape d'envoi (62, 81) de la ou de chaque donnée publique comprend une étape d'envoi d'une partie ($n_i$) de la clé publique, cette partie de la clé publique formant une première partie de la clé privée.

3. Procédé de chiffrement/déchiffrement d'un message selon l'une quelconque des revendications 1 et 2, **caractérisé en ce que** l'étape d'envoi (62, 81) de la ou de chaque donnée publique comprend une étape d'envoi d'un identifiant ($CID_i$) du dispositif client ($C_i$), et l'étape de détermination de la clé privée comprend une étape de calcul d'une seconde partie ($d_i$) de la clé privée à partir dudit identifiant envoyé.

4. Procédé de chiffrement/déchiffrement d'un message selon la revendication 3, **caractérisé en ce que** l'étape de détermination de la clé privée ($n_i$, $d_i$) correspondant à la clé publique ($n_i$, $e_i$) du dispositif client, comprend une étape de chiffrement (44, 64, 83) du résultat ($ECID_i$) d'une fonction appliquée à l'identifiant ($CID_i$) du dispositif client défini ($C_i$), par un algorithme symétrique, à l'aide de la clé maîtresse secrète (MK).

5. Procédé de chiffrement/déchiffrement d'un message selon la revendication 4, **caractérisé en ce que** l'étape de détermination de la clé privée ($n_i$, $d_i$) correspondant à la clé publique ($n_i$, $e_i$) du dispositif client, comporte une étape de sélection (45, 65, 84) de la seconde partie ($d_i$) de la clé privée, par une unité de calcul déterministe (8), à partir du résultat dudit chiffrement du résultat ($ECID_i$) d'une fonction appliquée à l'identifiant ($CID_i$) du dispositif client défini ($C_i$).

6. Procédé de chiffrement/déchiffrement d'un message selon la revendication 5, **caractérisé en ce que** l'étape de sélection de la seconde partie ($d_i$) de la clé privée, par l'algorithme déterministe, est réalisée par une sélection d'un nombre tel que :

   - ce nombre soit inférieur au résultat dudit chiffrement du résultat ($ECID_i$) d'une fonction appliquée à l'identifiant ($CID_i$) du dispositif client défini ($C_i$),
   - ce nombre soit le plus proche du résultat dudit chiffrement du résultat ($ECID_i$) d'une fonction appliquée à l'identifiant ($CID_i$) du dispositif client défini ($C_i$), et soit premier avec une liste de nombres premiers.

7. Procédé de chiffrement/déchiffrement d'un message selon l'une quelconque des revendications 3 à 6, **caractérisé en ce qu'**il comprend une étape de destruction (49, 67, 87) de l'identifiant ($CID_i$) du dispositif client défini ($C_i$) et de toutes les données ($p_i$, $q_i$, $d_i$, $ECID_i$, $e_i$, $n_i$) calculées à partir de l'identifiant pour déterminer la clé privée.

8. Procédé de chiffrement/déchiffrement d'un message selon l'une quelconque des revendications précédentes, **caractérisé en ce que** les opérations de cryptographie comprennent une opération d'identification d'un message comprenant les étapes suivantes :

   - signature du message (85), par le dispositif sécurisé (1), à l'aide de la clé privée ($n_i$, $d_i$) déterminée pendant l'étape de détermination de la clé privée,
   - transmission de la signature du message et du message (86) au dispositif client pour vérification de cette signature, et
   - vérification de la signature (87) du message, par le dispositif client, à l'aide de ladite clé publique ($n_i$, $e_i$).

9. Procédé de chiffrement/déchiffrement d'un message selon l'une quelconque des revendications précédentes, **caractérisé en ce que** les opérations de cryptographie comprennent une opération de sécurisation d'un message comprenant les étapes suivantes :

   - chiffrement (61) d'un message (m), par le dispositif client ($C_i$), à l'aide de la clé publique ($n_i$, $e_i$),
   - transmission (62) du message chiffré au dispositif sécurisé (1), et
   - déchiffrement (66) du message chiffré par le dispositif sécurisé (1), à l'aide de la clé privée ($n_i$, $d_i$) déterminée pendant l'étape de détermination d'une clé privée.

10. Procédé de chiffrement/déchiffrement d'un message selon l'une quelconque des revendications 3 à 9, **caractérisé en ce qu'**il comporte une phase préalable de personnalisation dudit dispositif client défini ($C_i$), qui comprend les étapes suivantes :

    - génération, par le dispositif sécurisé (1), d'une clé maîtresse secrète (MK) unique et d'un identifiant ($CID_i$) propre audit dispositif client défini ($C_i$) et apte à l'identifier,
    - calcul de ladite clé publique ($n_i$, $e_i$) du dispositif client défini ($C_i$) par un module de calcul (5) à partir de la seconde partie ($d_i$) de la clé privée.

11. Procédé de chiffrement/déchiffrement d'un message selon la revendication 10, dans lequel la phase de personnalisation comporte en outre les étapes suivantes :

    - sélection (46) de deux données secrètes constituées de deux grands nombres premiers $p_i$, $q_i$, tels que ($p_i$-1) x ($q_i$-1) soit premier avec la seconde partie ($d_i$) de la clé privée du dispositif client défini ($C_i$), et
    - calcul (48) d'un modulus $n_i$ du dispositif client défini ($C_i$) tel que :

$$n_i = p_i \times q_i,$$

    et
    - calcul (48) d'une partie ($e_i$) de la clé publique par un algorithme d'Euclide étendu à partir de la ou de chaque donnée secrète $p_i$, $q_i$ et du modulus $n_i$ du dispositif client défini ($C_i$).

12. Dispositif sécurisé (1) apte à échanger un message avec un dispositif client défini ($C_i$) d'un réseau de dispositifs clients ($C_i$, $C_j$), sur un réseau de communication, le dispositif sécurisé étant apte à recevoir au moins une donnée

publique (CID$_i$, n$_i$) propre audit dispositif client défini (C$_i$) et envoyée par celui-ci préalablement à tout échange de messages, le dispositif sécurisé (1) comprenant :

- des moyens de réalisation d'opérations de cryptographie asymétrique à l'aide d'une clé privée (n$_i$, d$_i$) correspondant à une clé publique (n$_i$, e$_i$) stockée dans le dispositif client défini (C$_i$)

**caractérisé en ce qu'**il comprend, en outre :

- des moyens de stockage (3) sécurisés d'une clé maîtresse (MK),
- des moyens (4) de détermination de ladite clé privée (d$_i$, n$_i$) à partir de la clé maîtresse (MK) et de la ou de chaque donnée publique (CID$_i$, n$_i$) envoyée.

**13.** Dispositif sécurisé selon la revendication 12, **caractérisé en ce que** la donnée publique (CID$_i$, n$_i$) comprend une partie (n$_i$) de la clé publique dudit dispositif client défini (C$_i$) et/ou un identifiant (CID$_i$) du dispositif client défini.

**14.** Dispositif sécurisé selon la revendication 13, **caractérisé en ce que** la clé privée est une clé mixte comprenant une première partie (n$_i$) correspondant à une partie de la clé publique (n$_i$, e$_i$) dudit dispositif client (C$_i$) défini et une deuxième partie secrète (d$_i$) calculée à partir de la clé maîtresse (MK) et de l'identifiant (CID$_i$) du dispositif client défini.

**15.** Dispositif sécurisé selon l'une quelconque des revendications 12 à 14, **caractérisé en ce que** les moyens de réalisation d'opérations de cryptographie asymétrique à l'aide de la clé privée (d$_i$, n$_i$) déterminée comprennent :

- des moyens de signature (S) d'un message (m), et
- des moyens de chiffrement (E) d'un message (m).

**16.** Dispositif sécurisé selon l'une quelconque des revendications 14 à 15, dans lequel les moyens de détermination (4) de la clé privée comprennent en outre :

- une unité de chiffrement (7) symétrique, à l'aide de la clé maîtresse (MK), apte à chiffrer le résultat (ECID$_i$) d'une fonction appliquée à l'identifiant (CID$_i$) du dispositif client défini (C$_i$), et/ou
- une unité de calcul (8) d'un algorithme déterministe de sélection de la deuxième partie secrète (d$_i$) de la clé privée à partir du résultat du chiffrement réalisé par l'unité (7) de chiffrement symétrique.

**17.** Dispositif sécurisé selon l'une quelconque des revendications 14 à 16, **caractérisé en ce qu'**il comprend outre un moyen d'initialisation des dispositifs clients du réseau, ledit moyen d'initialisation comprenant :

- un moyen de génération (2) aléatoire d'une clé maîtresse unique (MK) et d'une pluralité d'identifiants (CID$_j$, CID$_i$) distincts les uns des autres, chaque identifiant étant propre à caractériser un unique dispositif client (C$_i$) du réseau de dispositif client,
- une unité de calcul (9) apte à sélectionner deux données secrètes (p$_i$, q$_i$) en fonction de la valeur de la deuxième partie secrète (d$_i$) de la clé privée et à calculer une première partie (n$_i$) de la clé publique, et
- une unité de calcul (10) de la seconde partie (e$_i$) de la clé publique, par un algorithme d'Euclide Etendue, à partir des données secrètes (p$_i$, q$_i$), de la deuxième partie (d$_i$) de la clé privée et de la première partie (n$_i$) de la clé publique.

**18.** Programme d'ordinateur comportant des instructions pour l'exécution des étapes de procédé de chiffrement/déchiffrement d'un message selon l'une quelconque des revendications 1 à 11, lorsque le programme est exécuté sur un dispositif sécurisé réalisé à partir d'un calculateur programmable.

**19.** Support d'enregistrement utilisable sur un dispositif sécurisé réalisé à partir d'un calculateur programmable sur lequel est enregistré le programme selon la revendication 18.

**Claims**

**1.** Method for the encryption/decoding of a message for exchange between a transmitter and a receiver through a communication network, the transmitter and the receiver being respectively a protected device (1) and a defined customer device (C$_i$) in a network of customer devices (C$_i$, C$_j$), the method including the stages for:

- the implementation by the protected device (1) and by the defined customer device ($C_i$) respectively of asymmetrical cryptography operations using a private key ($n_i$, $d_i$) and a public key ($n_i$, $e_i$), the private key being different from the public key, and

- the sending (62, 81) of at least one public datum ($n_i$, $CID_i$) from the defined customer device ($C_i$) to the protected device (1),

**characterised in that** it further comprises, during each transmission/reception of a message encrypted by the protected device, a stage of determining the private key ($n_i$, $d_i$) corresponding to the public key ($n_i$, $e_i$) of the defined customer device ($C_i$), from a secret master key (MK) stored in the protected device, and from the or each public datum ($n_i$, $CID_i$) sent by the defined customer device ($C_i$).

2. Method for the encryption/decoding of a message according to claim 1, **characterised in that** the stage of sending (62, 81) the or each public datum comprises a stage of sending a part ($n_i$) of the public key, this part of the public key forming a first part of the private key.

3. Method for the encryption/decoding of a message according to any one of claims 1 and 2, **characterised in that** the stage of sending (62, 81) the or each public datum comprises a stage of sending an identifier ($CID_i$) of the customer device ($C_i$) and the stage of determining the private key comprises a stage of calculating a second part ($d_i$) of the private key from said sent identifier.

4. Method for the encryption/decoding of a message according to claim 3, **characterised in that** the stage of determining the private key ($n_i$, $d_i$) corresponding to the public key ($n_i$, $e_i$) of the customer device comprises a stage of encrypting (44, 64, 83) the result ($ECID_i$) of a function applied to the identifier ($CID_i$) of the defined customer device ($C_i$), by a symmetrical algorithm, using the secret master key (MK).

5. Method for the encryption/decoding of a message according to claim 4, **characterised in that** the stage of determining the private key ($n_i$, $d_i$) corresponding to the public key ($n_i$, $e_i$) of the customer device comprises a stage of selecting (45, 65, 84) the second part ($d_i$) of the private key, by a deterministic calculation unit (8), from the result of said encryption of the result ($ECID_i$) of a function applied to the identifier ($CID_i$) of the defined customer device ($C_i$).

6. Method for the encryption/decoding of a message according to claim 5, **characterised in that** the stage of selecting the second part ($d_i$) of the private key, by the deterministic algorithm, is carried out by a selection of a number such that:

- this number is lower than the result of said encryption of the result ($ECID_i$) of a function applied to the identifier ($CID_i$) of the defined customer device ($C_i$),

- this number is closest to the result of said encryption of the result ($ECID_i$) of a function applied to the identifier ($CID_i$) of the defined customer device ($C_i$), and is prime with a list of prime numbers.

7. Method for the encryption/decoding of a message according to any one of claims 3 to 6, **characterised in that** it comprises a stage of destroying (49, 67, 87) the identifier ($CID_i$) of the defined customer device ($C_i$) and all the data ($p_i$, $q_i$, $d_i$, $ECID_i$, $e_i$, $n_i$) calculated from the identifier in order to determine the private key.

8. Method for the encryption/decoding of a message according to any one of the previous claims, **characterised in that** the cryptography operations comprise an operation to identify a message comprising the following stages:

- signing the message (85), by the protected device (1), using the private key ($n_i$, $d_i$), determined during the private key determination stage,

- transmitting the message signature and the message (86) to the customer device for verification of this signature, and

- verification of the message signature (87), by the customer device, using said public key ($n_i$, $e_i$).

9. Method for the encryption/decoding of a message according to any one of the previous claims, **characterised in that** the cryptography operations comprise a message protection operation comprising the following stages:

- encryption (61) of a message (m), by the customer device ($C_i$), using the public key ($n_i$, $e_i$),

- transmission (62) of the encrypted message to the protected device (1), and

- decoding (66) of the encrypted message by the protected device (1), using the private key ($n_i$, $d_i$) determined during the private key determination stage.

10. Method for the encryption/decoding of a message according to any one of claims 3 to 9, **characterised in that** it comprises a prior phase of personalising said defined customer device ($C_i$), which comprises the following stages:

- generation, by the protected device (1), of a unique secret master key (MK) and an identifier ($CID_i$) specific to said defined customer device ($C_i$) and able to identify it,
- calculation of said public key ($n_i$, $e_i$) of the defined customer device ($C_i$) by a calculation module (5) from the second part ($d_i$) of the private key.

11. Method for the encryption/decoding of a message according to claim 10, wherein the personalisation phase additionally comprises the following stages:

- selection (46) of two secret data items constituted by two large prime numbers $p_i$, $q_i$, such that $(P_i-1) \times (q_i-1)$ is prime with the second part ($d_i$) of the private key of the defined customer device ($C_i$), and
- calculation (48) of a modulus $n_i$ of the defined customer device ($C_i$) such that:

$$n_i = p_i \times q_i$$

and
- calculation (48) of a part ($e_i$) of the public key by an extended Euclid algorithm from the or each secret datum $p_i$, $q_i$ and of the modulus $n_i$ of the defined customer device ($C_i$).

12. Protected device (1) able to exchange a message with a defined customer device ($C_i$) in a network of customer devices ($C_i$, $C_j$), on a communication network, the protected device being able to receive at least one public datum ($CID_i$, $n_i$) specific to said defined customer device ($C_i$) and sent by it prior to any exchange of messages, the protected device comprising:

- means for implementing asymmetrical cryptography operations using a private key ($n_i$, $d_i$) corresponding to a public key ($n_i$, $e_i$) stored in the defined customer device ($C_i$)
**characterised in that** it comprises, additionally:
- protected means (3) for storing a master key (MK),
- means for determining said private key ($d_i$, $n_i$) from the master key (MK) and from the or each public datum ($CID_i$, $n_i$) sent.

13. Protected device according to claim 12, **characterised in that** the public datum ($CID_i$, $n_i$) comprises a part ($n_i$) of the public key of said defined customer device ($C_i$) and/or an identifier ($CID_i$) of the defined customer device.

14. Protected device according to claim 13, **characterised in that** the private key is a mixed key comprising a first part ($n_i$) corresponding to a part of the public key ($n_i$, $e_i$) of said defined customer device ($C_i$) and a second secret part ($d_i$) calculated from the master key (MK) and from the identifier ($CID_i$) of the defined customer device.

15. Protected device according to any one of the claims 12 to 14, **characterised in that** the means for the implementation of asymmetrical cryptography operations using the determined private key ($d_i$, $n_i$) comprise:

- means for signing (S) a message (m), and
- means for encrypting (E) a message (m).

16. Protected device according to any one of claims 14 to 15, wherein the private key determination means (4) additionally comprise:

- a symmetrical encryption unit (7), using the master key (MK), able to encrypt the result ($ECID_i$) of a function applied to the identifier ($CID_i$) of the defined customer device ($C_i$) and/or
- a unit (8) for calculating a deterministic algorithm for the selection of the second secret part ($d_i$) of the private key from the result of the encryption carried out by the symmetrical encryption unit (7).

17. Protected device according to any one of claims 14 to 16, **characterised in that** it further comprises a means for initialising the customer devices in the network, said initialisation means comprising:

- a means for the random generation (2) of a unique master key (MK) and a plurality of identifiers ($CID_j$, $CID_i$) different from each other, each identifier being able to characterise a unique customer device ($C_i$) in the customer device network,
- a calculation unit (9) able to select two secret data items ($p_i$, $q_i$) as a function of the value of the second secret part ($d_i$) of the private key and to calculate a first part ($n_i$) of the public key, and
- a unit (10) for calculating the second part ($e_i$) of the public key, by an extended Euclid algorithm, from the secret data ($p_i$, $q_i$) of the second part ($d_i$) of the private key and the first part ($n_i$) of the public key.

18. Computer program comprising instructions for executing the stages in the method for the encryption/decoding of a message according to any one of claims 1 to 11, when the program is run on a protected device implemented from a programmable computer.

19. Recording medium that can be used on a protected device implemented from a programmable computer on which the programme according to claim 18 is recorded.


**Patentansprüche**

1. Ver-/Entschlüsselungsverfahren einer Nachricht, die zwischen einem Sender und einem Empfänger über ein Kommunikationsnetz auszutauschen ist, wobei der Sender und der Empfänger beide jeweils eine gesicherte Vorrichtung (1) und eine definierte Kundenvorrichtung ($C_i$) in einem Netz von Kundenvorrichtungen ($C_i$, $C_j$) sind und das Verfahren die nachstehenden Etappen umfasst:

- Durchführung asymmetrischer Krypto-Vorgänge durch die gesicherte Vorrichtung (1) und die definierte Kundenvorrichtung ($C_i$) jeweils mit Hilfe eines privaten Schlüssels ($n_i$, $d_i$) und eines öffentlichen Schlüssels ($n_i$, $e_i$), wobei sich der private Schlüssel vom öffentlichen Schlüssel unterscheidet, und
- Sendung (62, 81) von zumindest einem öffentlichen Datensatz ($n_i$, $CID_i$) der definierten Kundenvorrichtung ($C_i$) zur gesicherten Vorrichtung (1),

**dadurch gekennzeichnet, dass** es darüber hinaus anlässlich der Sendung/des Empfangs einer verschlüsselten Nachricht durch die gesicherte Vorrichtung eine Bestimmungsetappe des privaten Schlüssels ($n_i$, $d_i$), der dem öffentlichen Schlüssel ($n_i$, $e_i$) der definierten Kundenvorrichtung ($C_i$) entspricht, auf der Grundlage eines geheimen Masterschlüssels (MK), der in der gesicherten Vorrichtung abgespeichert ist, und des oder jedes öffentlichen Datensatzes ($n_i$, $CID_i$), der von der definierten Kundenvorrichtung ($C_i$) gesendet wird, umfasst.

2. Ver-/Entschlüsselungsverfahren einer Nachricht nach Anspruch 1, **dadurch gekennzeichnet, dass** die Sendeetappe (62, 81) des oder jedes öffentlichen Datensatzes eine Sendeetappe eines Teils ($n_i$) des öffentlichen Schlüssels umfasst, wobei dieser Teil des öffentlichen Schlüssels einen ersten Teil des privaten Schlüssels bildet.

3. Ver-/Entschlüsselungsverfahren einer Nachricht nach einem der Ansprüche 1 und 2, **dadurch gekennzeichnet, dass** die Sendeetappe (62, 81) des oder jedes öffentlichen Datensatzes eine Sendeetappe einer ID ($CID_i$) der Kundenvorrichtung ($C_i$) und die Bestimmungsetappe des privaten Schlüssels eine Kalkulationsetappe eines zweiten Teils ($d_i$) des privaten Schlüssels auf Grundlage dieser gesendeten ID umfasst.

4. Ver-/Entschlüsselungsverfahren einer Nachricht nach Anspruch 3, **dadurch gekennzeichnet, dass** die Bestimmungsetappe des privaten Schlüssels ($n_i$, $d_i$), der dem öffentlichen Schlüssel ($n_i$, $e_i$) der Kundenvorrichtung ($C_i$) entspricht, eine Verschlüsselungsetappe (44, 64, 83) des Ergebnisses ($ECID_i$) einer Funktion umfasst, die mit einem symmetrischen Algorithmus mittels des geheimen Masterschlüssels (MK) auf die ID ($CID_i$) der definierten Kundenvorrichtung ($C_i$) angewandt wird.

5. Ver-/Entschlüsselungsverfahren einer Nachricht nach Anspruch 4, **dadurch gekennzeichnet, dass** die Bestimmungsetappe des privaten Schlüssels ($n_i$, $d_i$), der dem öffentlichen Schlüssel ($n_i$, $e_i$) der Kundenvorrichtung ($C_i$) entspricht, eine Auswahletappe (45, 65, 84) des zweiten Teils ($d_i$) des privaten Schlüssels durch eine deterministische Kalkulationseinheit (8) auf der Grundlage des Verschlüsselungsergebnisses ($ECID_i$) einer Funktion umfasst, die auf die ID ($CID_i$) der definierten Kundenvorrichtung angewandt wird.

6. Ver-/Entschlüsselungsverfahren einer Nachricht nach Anspruch 5, **dadurch gekennzeichnet, dass** die Auswahletappe des zweiten Teils ($d_i$) des privaten Schlüssels mit dem deterministischen Algorithmus, wie nachstehend dargestellt, im Zuge der Auswahl einer Zahl durchgeführt wird:

   - Diese Zahl muss kleiner als das Verschlüsselungsergebnis des Ergebnisses ($ECID_i$) einer auf die ID ($CID_i$) der definierten Kundenvorrichtung ($C_i$) angewandten Funktion sein.
   - Diese Zahl muss dem Verschlüsselungsergebnis des Ergebnisses ($ECID_i$) einer auf die ID ($CID_i$) der definierten Kundenvorrichtung ($C_i$) angewandten Funktion sehr nahe kommen und mit einer Liste von Primzahlen priemen.

7. Ver-/Entschlüsselungsverfahren einer Nachricht nach einem der Ansprüche 3 bis 6, **dadurch gekennzeichnet, dass** es eine Vernichtungsetappe (49, 67, 87) der ID ($CID_i$) der definierten Kundenvorrichtung ($C_i$) und sämtlicher Datensätze ($p_i$, $q_i$, $d_i$. $ECID_i$, $e_i$, $n_i$) umfasst, die zur Bestimmung des privaten Schlüssels auf der Grundlage der ID kalkuliert wurden.

8. Ver-/Entschlüsselungsverfahren einer Nachricht nach einem der vorstehenden Ansprüche, **dadurch gekennzeichnet, dass** die Krypto-Vorgänge einen Identifikationsvorgang einer Nachricht umfassen, der die nachstehenden Etappen einschließt:

   - Signatur (85) der Nachricht durch die gesicherte Vorrichtung (1) mit Hilfe des privaten Schlüssels ($n_i$, $d_i$), der während der Bestimmungsetappe des privaten Schlüssels bestimmt wird.
   - Übertragung der Signatur der Nachricht und der Nachricht (86) an die Kundenvorrichtung zur Prüfung dieser Signatur und
   - Prüfung der Signatur (87) der Nachricht durch die Kundenvorrichtung mittels des öffentlichen Schlüssels ($n_i$, $e_i$).

9. Ver-/Entschlüsselungsverfahren einer Nachricht nach einem der vorstehenden Ansprüche, **dadurch gekennzeichnet, dass** die Krypto-Vorgänge einen Nachrichtensicherungsvorgang umfassen, der die nachstehenden Etappen einschließt:

   - Verschlüsselung (61) einer Nachricht ($m$) durch die Kundenvorrichtung ($C_i$) mit Hilfe des öffentlichen Schlüssels ($n_i$, $e_i$).
   - Übertragung (62) der verschlüsselten Nachricht zur Sicherheitsvorrichtung (1) und
   - Entschlüsselung (66) der verschlüsselten Nachricht durch die gesicherte Vorrichtung (1) mit Hilfe des privaten Schlüssels ($n_i$, $d_i$), der während der Bestimmungsetappe eines privaten Schlüssels bestimmt wird.

10. Ver-/Entschlüsselungsverfahren einer Nachricht nach einem der Ansprüche 3 bis 9, **dadurch gekennzeichnet, dass** es eine vorherige Phase der anwendungsbezogenen Auslegung der definierten Kundenvorrichtung ($C_i$) umfasst, die die nachstehenden Etappen einschließt:

    - Generierung eines einzigen geheimen Masterschlüssels (MK) und einer ID ($CID_i$), die der definierten Kundenvorrichtung ($C_i$) eigen und geeignet ist, sie zu identifizieren, durch die gesicherte Vorrichtung (1).
    - Kalkulation des öffentlichen Schlüssels ($n_i$, $e_i$) der definierten Kundenvorrichtung ($C_i$) mit einem Kalkulationsmodul (5) auf der Grundlage des zweiten Teils ($d_i$) des privaten Schlüssels.

11. Ver-/Entschlüsselungsverfahren einer Nachricht nach Anspruch 10, bei dem die anwendungsbezogene Auslegung darüber hinaus die nachstehenden Etappen umfasst:

    - Auswahl (46) der beiden geheimen Datensätze, die aus zwei großen Primzahlen $p_i$, $q_i$ gebildet werden, wobei ($p_i$ - 1) x ($q_i$ - 1) mit dem zweiten Teil ($d_i$) des privaten Schlüssels der definierten Kundenvorrichtung ($C_i$) priemt.
    - Kalkulation (48) eines Modulus n der definierten Kundenvorrichtung ($C_i$), wobei $n_i$ = $p_i$ x q und
    - Kalkulation (48) eines Teils ($e_i$) des öffentlichen Schlüssels mit einem erweiterten Euclide-Algorithmus auf der Grundlage des oder jedes geheimen Datensatzes $p_i$ , $q_i$ und des Modulus $n_i$ der definierten Kundenvorrichtung ($C_i$).

12. Gesichertes Verfahren (1), das geeignet ist, eine Nachricht mit einer definierten Kundenvorrichtung ($C_i$) eines Netzes von Kundenvorrichtungen ($C_i$, $C_j$) auf einem Kommunikationsnetz auszutauschen, wobei die gesicherte Vorrichtung geeignet ist, zumindest einen öffentlichen Datensatz ($CID_i$, $n_i$) zu empfangen, der der definierten Kundenvorrichtung ($C_i$) eigen ist und von derselbigen vor dem Nachrichtenaustausch gesendet wird, und die gesicherte Vorrichtung (1) folgendes umfasst:

- Mittel zur Ausführung asymmetrischer Krypto-Vorgänge mit Hilfe eines privaten Schlüssels ($n_i$, $d_i$), der einem in der definierten Kundenvorrichtung ($C_i$) abgespeicherten öffentlichen Schlüssel ($n_i$, $e_i$) entspricht,

**dadurch gekennzeichnet, dass** sie ferner:
gesicherte Speichermittel (3) eines Masterschlüssels (MK),

- Mittel (4) zur Bestimmung des privaten Schlüssels ab dem Masterschlüssel (MK) und dem gesendeten oder jedem gesendeten öffentlichen Datensatz ($CID_i$, $n_i$) umfasst.

13. Gesicherte Vorrichtung nach Anspruch 12, **dadurch gekennzeichnet, dass** der öffentliche Datensatz ($CID_i$, $n_i$) einen Teil ($n_i$) des öffentlichen Schlüssels der definierten Kundenvorrichtung ($C_i$) und/oder eine ID ($CID_i$) der definierten Kundenvorrichtung umfasst.

14. Gesicherte Vorrichtung nach Anspruch 13, **dadurch gekennzeichnet, dass** der private Schlüssel ein Kombischlüssel ist, der einen ersten Teil ($n_i$) entsprechend einem Teil des öffentlichen Schlüssels ($n_i$, $e_i$) der definierten Kundenvorrichtung ($C_i$) und einen zweiten geheimen Teil ($d_i$), der auf der Grundlage des Masterschlüssels (MK) und der ID ($CID_i$) der definierten Kundenvorrichtung berechnet wird, umfasst.

15. Gesicherte Vorrichtung nach einem der Ansprüche 12 bis 14, **dadurch gekennzeichnet, dass** die Mittel zur Ausführung asymmetrischer Krypto-Vorgänge mit Hilfe des bestimmten privaten Schlüssels ($d$, $n$) folgendes umfassen:

- Signaturmittel (S) einer Nachricht ($m$) und
- Verschlüsselungsmittel (E) einer Nachricht ($m$).

16. Gesicherte Vorrichtung nach einem der Ansprüche 14 bis 15, bei der die Mittel (4) zur Bestimmung des privaten Schlüssels unter anderem folgendes umfassen:

- eine symmetrische Verschlüsselungseinheit (7) mit Hilfe des Masterschlüssels (MK), der geeignet ist, das Ergebnis ($ECID_i$) einer Funktion zu verschlüsseln, die auf die ID ($CID_i$) der definierten Kundenvorrichtung ($C_i$) angewandt wird, und/oder
- eine Kalkulationseinheit (8) eines deterministischen Auswahlalgorithmus des zweiten geheimen Teils ($d_i$) des privaten Schlüssels ab dem Verschlüsselungsergebnis, das mit der symmetrischen Verschlüsselungseinheit (7) erzielt wird.

17. Gesicherte Vorrichtung nach einem der Ansprüche 14 bis 16, **dadurch gekennzeichnet, dass** sie darüber hinaus ein Initialisierungsmittel der netzseitigen Kundenvorrichtungen umfasst, das folgendes aufweist:

- ein Mittel (2) zur wahllosen Generierung eines einzelnen Masterschlüssels (MK) und einer Vielzahl gesonderter ID ($CID_j$, $CID_i$), wobei jede ID geeignet ist, eine einzige netzseitige Kundenvorrichtung ($C_i$) zu kennzeichnen.
- eine Kalkulationseinheit (9), die geeignet ist, zwei geheime Datensätze ($p$, $q$) in Abhängigkeit vom Wert des zweiten geheimen Teils ($d$) des privaten Schlüssels auszuwählen und einen ersten Teil ($n_i$) des öffentlichen Schlüssels zu kalkulieren, und
- eine Kalkulationseinheit (10) des zweiten Teils ($e_i$) des öffentlichen Schlüssels mittels eines erweiterten Euclide-Algorithmus auf der Grundlage geheimer Datensätze ($p_i$, $q_i$) des zweiten Teils ($d_i$) des privaten Schlüssels und des ersten Teils ($n_i$) des öffentlichen Schlüssels.

18. Computerprogramm, das Anweisungen zur Ausführung der Etappen von Ver-/Entschlüsselungsverfahren einer Nachricht nach einem der Ansprüche 1 bis 11 umfasst, wenn das Programm auf einer gesicherten Vorrichtung mit einem programmierbaren Rechner ausgeführt wird.

19. Aufzeichnungsträger, der auf einer gesicherten Vorrichtung genutzt werden kann, die auf der Grundlage eines programmierbaren Rechners ausgeführt wird, auf dem das Programm nach Anspruch 18 abgespeichert ist.

FIG.1

FIG.2

15

$$\textit{FIG.3}$$

FIG.4

FIG.5

61 — Chiffrement du message
par la clé publique

62 — Envoi de
$CID_j, E\{PubC_j\}(m), n_j$

63 — Calcul de
$ECID_j$

64 — Chiffrement de
$ECID_j$

65 — Calcul de $d_j$

66 — Déchiffrement du message

67 — Destruction de $CID_j, ECID_j, d_j, n_j$

## FIG.6

**FIG.7**

81 — Demande de $CID_j$ et de $n_j$

82 — Calcul de $ECID_j$

83 — Chiffrement de $ECID_j$

84 — Calcul de $d_j$

85 — Signature du message

86 — Envoi du message et de sa signature

87 — Vérification de la signature du message

88 — Destruction de $CID_j, ECID_j, n_j, d_j$

## FIG.8